# FASCICULE DE BREVET EUROPEEN

(11) **EP 0 734 357 B1**
(45) Date de publication et mention de la délivrance du brevet: **03.06.1998**
(21) Numéro de dépôt: 95934172.8
(22) Date de dépôt: 05.10.1995
(51) Int. Cl.: C03C 3/093, C03C 3/085, C03C 3/087, C03C 21/00, G11B 5/82

(54) **SUBSTRAT EN VERRE RENFORCE**
SUBSTRAT AUS VERSTÄRKTEM GLAS
REINFORCED GLASS SUBSTRATES

(30) Priorité: 13.10.1994 FR 9412209; 30.11.1994 FR 9414352
(43) Date de publication de la demande: 02.10.1996
(73) Titulaire: SAINT-GOBAIN VITRAGE, 92400 Courbevoie (FR)
(72) Inventeur: RIFQI, Françoise, F-75017 Paris (FR); KOCH, Stéphanie, F-92600 Asnières (FR); JOUSSE, Didier, F-95320 St-Leu-La-Forêt (FR)
(74) Mandataire: Le Cam, Stéphane Georges Elie
(86) Numéro de dépôt international: FR9501296
(87) Numéro de publication internationale: WO9611888

(56) Documents cités:
- EP-A- 0 228 814
- EP-A- 0 579 399
- EP-A- 0 592 237
- DE-A- 2 020 674
- US-A- 4 015 966
- CHEMICAL ABSTRACTS, vol. 114, no. 14, 8 Avril 1991 Columbus, Ohio, US; abstract no. 127726u, YUNUSOV ET AL. 'glass' page 323; & SU,A,1 604 763 7 Novembre 1990
- CHEMICAL ABSTRACTS, vol. 99, no. 2, 11 Juillet 1983 Columbus, Ohio, US; abstract no. 9768h, NIKULIN ET AL. 'heat-absorbing glass' page 240; & SU,A,998 401 23 Février 1983
- CHEMICAL ABSTRACTS, vol. 98, no. 18, 2 Mai 1983 Columbus, Ohio, US; abstract no. 148473a, MKRTCHYAN ET AL. 'glass' page 309; & SU,A,975 618 23 Novembre 1982

## Description

L'invention concerne des substrats en verre notamment utilisés comme support dans la réalisation d'unités de stockage de données. Plus particulièrement, l'intention concerne des substrats en verte sous forme de disques utilisés notamment comme mémoires *〈〈 périphériques 〉〉* dans le domaine de l'informatique.

Bien que l'invention ne se limite pas à cette application, elle sera décrite en référence à la réalisation de disques durs magnétiques.

Un disque dur magnétique se compose généralement d'un élément support façonné pour qu'il possède la forme d'un disque percé en son centre. Sur ce disque, peut notamment être déposée une série de couches minces magnétiques qui servent au stockage des données.

Les données sont enregistrées et lues à l'aide d'une ou plusieurs têtes de lecture qui sont placées au-dessus du disque alors que celui-ci est animé d'un mouvement de rotation. Pour obtenir une lecture performante des données, la tête de lecture doit approcher le disque au plus près ; on parle alors de *〈〈 contact recording 〉〉*. En effet, le signal détecté par la tête décroît exponentiellement quand son altitude augmente. De plus, les exigences actuelles nécessitent une densité de stockage de plus en plus importante. Cela se traduit par le stockage d'une information donnée sur une surface de plus en plus réduite. Pour assurer la lecture de données enregistrées de cette façon, la distance séparant le disque de la tête de lecture doit être de plus en plus réduite ; cette distance doit être inférieure à 300 Angströms.

Des substrats pour la réalisation de disques durs magnétiques sont notamment décrits dans le brevet US 5,316,844 ; il s'agit de substrats en aluminium. Ce document décrit également un aspect important de ces substrats : ceux-ci ne doivent présenter qu'une très faible rugosité. Ce document indique des valeurs de rugosité dont le Ra, ou rugosité moyennée, est compris entre 100 et 300 Angströms. Les exigences actuelles, liées au besoin croissant de stockage et donc à une distance disque-tête de lecture de plus en plus faible, correspondent à un Ra inférieur à 30 Angströms.

D'autre part, si les exigences concernant la capacité de mémoire des disques durs magnétiques sont de plus en plus importantes, une autre exigence qui peut sembler paradoxale concerne les dimensions de ces disques durs.

En effet, ces unités de stockage de données doivent être d'un encombrement le plus réduit possible et présenter une masse également réduite. Ces exigences sont liées d'une part au besoin croissant d'unités de stockage portables donc peu encombrantes et légères ; le développement d'outils informatiques portables et de logiciels nécessitant de grandes capacités de mémoire sont à la base de ce besoin. D'autre part, toujours pour augmenter les capacités de stockage de données, il est intéressant de pouvoir associer plusieurs disques durs magnétiques dans un espace donné et donc d'avoir des substrats présentant une épaisseur réduite.

Un substrat réalisé en aluminium ne peut avoir une épaisseur inférieure à 0,6 millimètre et à la fois présenter les qualités requises pour constituer un disque dur, notamment en terme de rigidité et de résistance à l'endommagement lors du choc de la tête de lecture contre le disque.

Pour remédier à ces inconvénients et pouvoir alléger et éventuellement réduire l'épaisseur d'un tel substrat, il a été proposé notamment dans la demande de brevet EP 579 399 de le réaliser en verte. Il a notamment été utilisé des compositions verrières usuelles permettant d'obtenir un verre *〈〈 float 〉〉* du type bâtiment ou automobile. Le verre type float est obtenu sous forme de ruban puis transformé en feuille et enfin découpé et façonné en disques aux dimensions requises. Ceux-ci sont ensuite polis pour obtenir l'épaisseur et la rugosité désirées.

Il est apparu au cours d'essais que ces substrats en verre sont sujets à différents inconvénients et ne peuvent ainsi pas satisfaire à la réalisation de disques durs magnétiques.

En particulier, la surface de ces substrats en verre type float subit une déperdition importante d'alcalins et notamment de potassium ou de sodium et essentiellement de l'ion apporté par une trempe chimique. Or ces alcalins ont des effets néfastes sur les couches magnétiques déposées sur les substrats. En effet, il apparaît que le relargage des alcalins dans ces couches entraîne la destruction des données enregistrées a plus ou moins court terme.

L'invention a pour but de pallier ces inconvénients et plus particulièrement de fournir des substrats utilisés comme supports dans la réalisation d'unités de stockage de données telles que des disques durs magnétiques, qui permettent des stockages d'un grand nombre d'informations et présentent un encombrement et un poids limités.

L'invention a également pour but de tels substrats qui présentent des résistances mécanique et chimique suffisantes et ne présentent pas les inconvénients observés pour des substrats en verre du type float, cités précédemment.

Ce but est atteint selon l'invention par un substrat en verre, destiné a être utilisé comme support dans des unités de stockage de données, renforcé par échange d'ions superficiel et dont la matrice comprend les constituants ci-après dans les proportions pondérales suivantes :

| | |
|---|---|
| SiO₂ | 45 - 65 % |
| Al₂O₃ | 0 - 20 % |
| B₂O₃ | 0 - 5 % |
| Na₂O | 4 - 12 % |
| K₂O | 3.5 - 12 % |
| MgO | 0 - 8 % |
| CaO | 0 - 13 % |
| ZrO₂ | 0 - 20 % |

la somme des oxydes SiO₂, Al₂O₃ et ZrO₂ demeurant égale ou inférieure à 70 %, ladite composition comprenant éventuellement les oxydes BaO et/ou SrO dans des proportions telles que 11 % ≤ MgO + CaO + BaO + SrO ≤ 24 % et les oxydes alcalins étant introduits selon des pourcentages pondéraux tels que 0,22 ≤ Na₂O/ Na₂O + K₂O ≤ 0,60.

Les matrices verrières des substrats selon l'invention comprennent avantageusement l'oxyde ZnO-dans une proportion pondérale inférieure à 10% et de préférence inférieure à 4%. Cet oxyde a notamment la faculté d'améliorer la résistance hydrolytique sans augmenter la viscosité aux températures élevées.

Un substrat réalisé à partir d'une des compositions énumérées précédemment et ayant subi un échange ionique, notamment par un traitement de trempe chimique, peut être utilisé comme support pour la réalisation d'une unité de stockage de données et plus particulièrement d'un disque dur magnétique. En effet, la résistance mécanique et la résistance chimique ou hydrolytique obtenues conviennent à ce type d'utilisation.

Par ailleurs, comme il l'a déjà été dit précédentment il existe des contraintes de rugosité également liées à ces vitesses de rotation très élevées et à la position relativement proche de la tête de lecture ; les exigences sont un Ra inférieur à 30 Angströms.

Or il est notamment possible à partir de techniques connues dans l'industrie verrière de transformer une feuille de verte obtenue par le procédé float en un tel substrat satisfaisant aux différentes tolérances. Ces techniques consistent essentiellement en des étapes de découpe, perçage et façonnage des bords (ou *〈〈 débordage 〉〉*). Suivent alors des étapes de polissage classique par moyens mécaniques qui permettent d'une part d'obtenir l'épaisseur voulue et d'autre part une rugosité dont le Ra est inférieur à 30 Angströms. Il est encore possible de réaliser un polissage de finition qui permet d'atteindre une rugosité dont le Ra est inférieur à 10 Angströms. Un tel polissage peut éventuellement combiner plusieurs étapes de polissage par voies mécaniques et/ou chimiques.

Dans une variante de l'invention, il est prévu de réaliser ces substrats par une technique de pressage ; une paraison est amenée dans un moule où une presse lui donne la forme voulue. Il est alors possible de procéder aux différentes étapes de polissage.

L'invention prévoit encore d'autres méthodes pour réaliser ces substrats. Une liste non limitative de procédés de formage pouvant être utilisés est donnée ci-après : laminage, étirage vers le bas, tronçonnage de rondelles.

Dans une variante de l'invention, le substrat en verte a une matrice comprenant les constituants ci-après dans les proportions pondérales suivantes :

| | |
|---|---|
| SiO₂ | 45 - 65 % |
| Al₂O₃ | 5 - 20 % |
| B₂O₃ | 0 - 5 % |
| Na₂O | 4 - 12 % |
| K₂O | 4 - 12 % |
| MgO | 0 - 8 % |
| CaO | 0 - 8 % |
| ZrO₂ | 0 - 6 % |

Selon un mode préféré de cette variante de l'invention, l'oxyde Al₂O₃, favorable pour la résistance chimique, a une teneur globale supérieure à 10 %. Il permet également d'augmenter la température inférieure de recuisson (température de strain point), qui est un facteur intéressant notamment pour la réalisation de trempe chimique à haute température.

La teneur en ZrO₂, élément difficile à fondre, est avantageusement inférieure à 5 %

L'oxyde B₂O₃ n'intervient que faiblement dans les propriétés mécaniques et chimiques de la matrice verrière. Il présente par ailleurs l'avantage de diminuer la viscosité aux températures élevées. La teneur en B₂O₃ sera avantageusement comprise entre 0 et 3 %, et de préférence inférieure à 2% pour favoriser l'homogénéité du verre.

On utilisera donc de préférence une composition de verre choisie parmi les suivantes :

| | |
|---|---|
| SiO₂ | 45 - 60 % |
| Al₂O₃ | 10 - 20 % |
| B₂O₃ | 0 - 3 % |
| Na₂O | 4 - 12 % |
| K₂O | 4 - 12 % |
| MgO | 0 - 8 % |
| CaO | 0 - 8 % |
| ZrO₂ | 0 - 5 % |

la somme des oxydes SiO₂, Al₂O₃ et ZrO₂ demeurant égale ou inférieure à 70 %, ladite composition comprenant éventuellement les oxydes BaO et/ou SrO dans des proportions telles que 14 % ≤ MgO + CaO + BaO + SrO ≤ 22 % et les oxydes alcalins étant introduits selon des pourcentages pondéraux tels que : 0,22 ≤ Na₂O/ Na₂O + K₂O ≤ 0,60.

La teneur globale en éléments alcalino-terreux est maintenue suffisamment élevée pour permettre d'obtenir une faible viscosité à haute température. Ceci est notamment intéressant lorsque le verre est obtenu selon le procédé float.

La présence de ces éléments favorisent également la fusion de ces compositions de verre. BaO contribue à la diminution de la viscosité aux températures élevées. Il permet également de réduire les risques de dévitrification. MgO et SrO permettent d'aug-menter la résistance hydrolytique des verres.

En ce qui concerne les teneurs en oxydes alcalins Na₂O et K₂O, celles-ci sont avantageusement choisies voisines d'un point de vue molaire. En effet, on observe alors un phénomène alkali-mixte qui limite la migration des alcalins en surface ; il apparaît que la migration des ions est fortement diminuée lorsque Na₂O et K₂O sont en quantités molaires à peu près équivalentes. L'état surfacique obtenu après échange ionique, c'est-à-dire, par exemple, une absence d'ions sodium sur une faible épaisseur, peut perdurer en raison de l'effet alkali-mixte qui limite la migration des ions.

Selon une autre variante de l'invention, le substrat en verre a une matrice, appartenant à une autre famille, comprenant les constituants ci-après dans les proportions pondérales suivantes :

| | |
|---|---|
| SiO₂ | 45 - 63 % |
| Al₂O₃ | 0 - 18 % |
| Na₂O | 4 - 12 % |
| K₂O | 3.5 - 7 % |
| MgO | 1 - 8 % |
| CaO | 1- 13 % |
| ZrO₂ | 6.5 -20 % |

Pour cette famille de verte, ZrO₂ joue un rôle de stabilisant. Cet oxyde augmente dans une certaine mesure la résistance chimique du verre et favorise l'augmentation de la température de recuisson. Le pourcentage de ZrO₂ ne doit pas excéder 20% sous peine de rendre trop difficile la fusion. Si cet oxyde est difficile à fondre, il présente l'avantage de ne pas augmenter la viscosité des verres selon l'invention aux températures élevées. Cela permet d'éviter d'introduire dans ces verres des oxydes tel que B₂O₃, dont l'un des effets est de réduire la viscosité du verre, ou d'augmenter la teneur des oxydes alcalins qui ont le même effet.

Les verres selon cette variante de l'invention peuvent également contenir de l'alumine qui joue un rôle similaire à celui de l'oxyde de zirconium. L'alumine augmente la résistance chimique de ce type de verre, favorise l'élévation de sa température inférieure de recuisson. Par contre, c'est un oxyde difficile à fondre, et qui augmente la viscosité du verre aux températures élevées.

D'une façon globale, la fusion des verres selon cette variante de l'invention reste dans des limites de températures acceptables pour une production selon le procédé float, sous réserve que la somme des oxydes SiO₂, ZrO₂ et Al₂O₃ demeure égale ou inférieure à 70%. Par limites acceptables, il faut entendre que la température du verre correspondant à log η = 1,6 ne dépasse pas environ 1630°C et de préférence 1590°C.

Dans les verres selon l'invention, la somme des oxydes ZrO₂ et Al₂O₃ est avantageusement égale ou supérieure à 8% et, de préférence, comprise entre 8 et 22%. Leur teneur en ZrO₂ est avantageusement comprise entre 8 et 15%.

Les compositions de verre préférées selon cette variante de l'invention comprennent les constituants ci-après dans les proportions pondérales suivantes :

| | |
|---|---|
| SiO₂ | 45 - 59 % |
| Al₂O₃ | 0 - 10 % |
| Na₂O | 4 - 10 % |
| K₂O | 3.5 - 7 % |
| MgO | 1 - 7 % |
| CaO | 1 - 12 % |
| ZrO₂ | 8 - 15 % |

Selon un mode préféré de l'invention les échanges d'ions superficiels sont obtenus dans un bain de KNO₃ qui permet un échange d'ions sodium en ions potassium.

Dans une variante, on utilise un bain mixte, c'est-à-dire un bain contenant plusieurs types d'ions alcalins, qui permet un échange ionique multiple.

Dans d'autres variantes, la trempe chimique peut être activée par des facteurs externes tels que la création d'un champ électrique ou bien la présence d'ultrasons.

La trempe chimique peut également être combinée avec un prétraitement thermique.

D'un point de vue économique, il est nécessaire d'effectuer cette trempe chimique le plus rapidement possible. Ce temps de trempe est de préférence inférieur à 15 heures et de préférence encore inférieur à 7 heures. La température de trempe est avantageusement comprise entre 400 et 520° C.

Une trempe effectuée dans de telles conditions conduit à des modules de rupture, en flexion annulaire, supérieurs à 500 MPa et une profondeur de trempe d'au moins 14 microns.

La trempe ainsi réalisée a une double fonction. D'une part, elle renforce la résistance chimique du substrat ; en effet, il apparaît que l'attaquabilité hydrolytique du substrat trempé diminue.

D'autre part, la trempe permet un renforcement mécanique de la surface. Elle renforce en surface les propriétés intrinsèques du substrat liées à sa composition. Ceci est très intéressant et permet d'obtenir une résistance mécanique satisfaisante notamment une résistance à la flexion, aux chocs, et à l'écrasement par exemple dû à la tête de lecture.

De plus, les auteurs de la présente invention ont su mettre en évidence les raisons de casses des disques durs magnétiques animés d'un mouvement de rotation à grande vitesse ; lors du perçage et du façonnage, notamment du trou intérieur, beaucoup de défauts apparaissent dans les zones qui sont difficilement façonnables. La trempe chimique permet donc de renforcer les bords façonnés du substrat.

Un substrat selon l'invention tel qu'il vient d'ètre décrit satisfait aux critères requis pour être utilisé comme support dans la réalisation d'un disque dur magnétique.

Celui-ci procure, du fait de la combinaison de la composition et de la trempe chimique éventuellement associée à un autre traitement préalable, une résistance mécanique suffisante, d'une part en surface pour supporter l'écrasement de la tête de lecture, et d'autre part sur les bords, notamment intérieur, qui peuvent résister aux vitesses de rotation élevées.

Il présente également une résistance chimique suffisante et notamment une résistance hydrolytique assurant une pérennité d'un disque dur magnétique.

D'autres détails et caractéristiques de l'invention ressortiront ci-après de la description d'exemples de réalisation de substrats selon l'invention et des essais réalisés.

Les substrats réalisés sont des disques qui présentent les dimensions suivantes :

| | |
|---|---|
| - diamètre extérieur | 65 mm |
| - diamètre intérieur | 20 mm |
| - épaisseur | 0,635 mm |

Les compositions choisies A, B et C pour la réalisation de ces substrats sont les suivantes : elles sont exprimées en pourcentages pondéraux :

| | **A** | **B** | **C** |
|---|---|---|---|
| SiO₂ | 53,6 % | 48,5 % | 54,6 % |
| Al₂O₃ | 10,0 % | 14,8 % | 3,0 % |
| B₂O₃ | 2,2 % | 0 % | 0 % |
| Na₂O | 5,2 % | 5,3 % | 6,0 % |
| K₂O | 6,2 % | 6,5 % | 6,9 % |
| MgO | 4,2 % | 3,8 % | 4,2 % |
| CaO | 6,8 % | 6,6 % | 3,5 % |
| SrO | 7,0 % | 7,0 % | 8,0 % |
| BaO | 2,8 % | 5,5 % | 3,8 % |
| ZrO₂ | 2,0 % | 2,0 % | 10,0 % |

Les compositions sont fondues et transformées en rubans de verre selon le procédé float, puis en feuilles de verre.

Les substrats sont donc obtenus par découpe, façonnage puis polissage.

Le polissage est réalisé par des moyens classiques de nature mécanique et permet d'atteindre une rugosité dont le Ra est inférieur à 10 Angströms.

Une trempe chimique est ensuite réalisée dans un bain de nitrate de potassium (KNO₃).

Il est intéressant de noter que les compositions présentent des températures de strain point, c'est-à-dire des températures inférieures de recuisson, élevées (de l'ordre de 580°C) qui permettent d'effectuer la trempe à une température relativement élevée ; une trempe chimique est d'autant plus efficace lorsque l'on se trouve à une température proche de celle du strain point. Or une température plus élevée lors de la trempe permet de réaliser celle-ci plus rapidement en gardant une contrainte de surface élevée et/ou une profondeur d'échange ionique importante.

D'autres valeurs remarquables de ces compositions sont également intéressantes. En effet, ces compositions sont choisies pour un formage selon le procédé float et doivent en conséquence satisfaire aux exigences liées à ce procédé. Il s'agit notamment des températures correspondant aux viscosités requises lors de la fusion log η = 1,6 et lors de l'entrée sur le bain d'étain log η = 3,5. Les températures correspondantes des compositions choisies sont les suivantes :

| | A | B | C |
|---|---|---|---|
| T (log η = 1,6) | 1556° C | 1587° C | 1559° C |
| T (log η = 3,5) | 1137° C | 1183° C | 1181° C |

Ces températures sont tout à fait compatibles avec le procédé float.

De plus, les températures de liquidus des compositions sont :
- - A :: TLiq = 1120°C
- - B :: TLiq = 1180°C
- - C :: TLiq = 1170°C

Ces températures étant inférieures à T(log η = 3,5), les verres peuvent être obtenus selon le procédé float sans risque de dévitrification.

Différents essais, permettant de caractériser d'une part la résistance mécanique et d'autre part la résistance chimique, ont été réalisés sur des substrats tels qu'ils viennent d'être décrits.

Le premier essai réalisé concerne la résistance aux chocs thermiques. Ce test a notamment permis de montrer que les substrats réalisés selon l'invention sont adaptés aux traitements qu'ils doivent subir ultérieurement, par exemple, lors du dépôt de couches magnétiques.

Lors de l'essai, les substrats ont résisté sans dommage à des variations de températures allant de 350° C à 20° C.

Un autre essai dont il a déjà été fait mention précédemment consiste à mettre en rotation un substrat à grande vitesse (7000 à 25000 tours/mn). Les substrats selon l'invention ont satisfait à ce test. Le renforcement notamment des bords obtenu après la trempe chimique est donc satisfaisant.

Le dernier essai mécanique réalisé consiste en une flexion annulaire. Le dispositif d'essai se compose d'une part, d'un cylindre creux de diamètre 55 mm sur lequel on dépose le substrat de façon concentrique et d'autre part d'un cylindre creux de diamètre 30 mm qui vient appuyer en flexion sur le substrat ; le dernier cylindre étant également concentrique à l'égard des autres éléments.

Cet essai a été réalisé sur des substrats selon l'invention ayant subi des trempes chimiques de durées différentes. Il a également été réalisé sur un substrat non trempé.

Les résultats de ces essais sont comparés à celui obtenu sur un substrat ayant subi une trempe chimique et dont la composition est du type silico-sodo-calcique usuellement utilisé pour le procédé *〈〈 float 〉〉*. Ce substrat présente un taux de relargage d'alcalins trop important pour satisfaire aux exigences requises pour une utilisation comme support dans un disque dur magnétique. Par contre, son module de rupture, en flexion annulaire, ou sa contrainte de surface sont jugés satisfaisants et le module de rupture peut donc servir de référence. Les exigences actuelles requises pour ce type de substrat sont un module de rupture moyen supérieur à 240 MPa avec une valeur minimum supérieure à 150 MPa.

Les résultats obtenus sont les suivants :

| **Nature du substrat** | **Durée et température de trempe chimique** | **Module de rupture MPa** |
|---|---|---|
| Composition A | pas de trempe | 117 |
| Composition A | 4 h 00 mn 500°C | 396 |
| Composition A | 7 h 00 mn 500° C | 601 |
| Composition B | 4 h 00 mn 500°C | 380 |
| Composition B | 7 h 00 mn 500° C | 571 |
| Composition C | 4 h 00 mn 500° C | 390 |
| Composition C | 7 h 00 mn 500° C | 560 |

Les résultats présentés dans ce tableau montrent qu'un traitement de trempe d'une durée pouvant être inférieure à 4 heures est satisfaisant pour conduire à la résistance mécanique souhaitée.

Par ailleurs, la profondeur des défauts d'un substrat selon l'invention n'ayant pas subi de traitement de trempe chimique a été estimée ; cette mesure a mis en évidence une profondeur maximum de 15 microns. La profondeur d'échange lors de la trempe doit donc être supérieure à cette valeur. Des mesures de profondeurs d'échanges ont été faites pour la composition A. Ces mesures ont été réalisées avec une microsonde électronique. Il apparaît qu'à partir de 4 heures de traitement, la valeur de 15 microns est déjà dépassée.

| | Durée et température de trempe chimique | Profondeur d'échange Microns |
|---|---|---|
| Composition A | 4 h 00 mn 500° C | 23 |
| Composition B | 7 h 00 mn 500° C | 31 |

D'autres essais, concernant la résistance hydrolytique de substrats selon l'invention, ont été réalisés.

La première mesure de résistance hydrolytique est effectuée sur des substrats selon l'invention n'ayant pas subi de trempe chimique. Cette mesure est comparée à celle effectuée sur un substrat dont la composition de verre est du type *〈〈 float 〉〉*. Ces mesures sont effectuées par la méthode D.G.G.

Cette méthode consiste à plonger 10 grammes de verre broyé, dont la taille des grains est comprise entre 360 et 400 micromètres, dans 100 millitres d'eau portés à ébullition pendant 5 heures. Après refroidissement rapide, on filtre la solution et on évapore à sec un volume déterminé du filtrat. Le poids de la matière sèche obtenue permet de calculer la quantité de verre dissoute dans l'eau ; cette quantité est exprimée en mllligrammes par gramme de verre testé.

### Résultats :

| | |
|---|---|
| - Substrat A | 7 mg/g |
| - Substrat B | 6 mg/g |
| - Substrat C | 11 mg/g |
| - Substrat type 〈〈 float 〉〉 | 30 mg/g |

Ces résultats montrent que les substrats selon l'invention présentent une résistance hydrolytique nettement supérieure à celle d'un substrat réalisé à partir d'une composition classique pour une utilisation selon le procédé float. En fait, la valeur mesurée, selon cette méthode, sur un substrat selon l'invention correspond quasiment à celle qui serait mesurée pour une composition de verre sans alcalin.

La composition de verre selon l'invention est donc très intéressante d'un point de vue résistance chimique.

Une autre méthode permettant d,évaluer la résistance hydrolytique d'un substrat selon l'invention, ayant éventuellement subi cette fois-ci un traitement de trempe chimique, consiste en un vieillissement du substrat dans une enceinte close pendant une durée d'une semaine maintenue à une température de 80° C et dans une atmosphère dont le taux d'humidité relative est 80%.

Le substrat est ensuite observé en microscopie électronique à balayage et les cristallisations de surface sont analysées par EDX (Energy Dispersive X-ray).

Ce test ne permet pas de quantifier le taux de relargage des alcalins. Par contre, il permet de comparer les différents substrats. Il est ainsi possible de garantir la pérénité d'un substrat par exemple à partir d'un substrat de référence.

Une dernière méthode pour évaluer la résistance hydrolytique d'un substrat ayant subi un traitement de trempe chimique, consiste en une immersion de plusieurs heures (environ 24 heures) dans de l'eau déminéralisée à 80°C, suivie d'un dosage par torche à plasma des ions passés en solution, et plus particulièrement des alcalins (K⁺, Na⁺, Li⁺). Il s'avère que ce test quantitatif est bien corrélé avec le test précédemment décrit.

Ces tests ont été effectués sur des substrats selon l'invention. Les résultats obtenus sont satisfaisants et montrent que la résistance hydrolytique des substrats après trempe chimique est satisfaisante pour les applications visées.

Les résultats des différents essais présentés mettent en évidence la résistance mécanique et la résistance hydrolytique d'un substrat réalisé selon l'invention. Ils confirment ainsi la possibilité d'utiliser les substrats selon l'invention comme support dans une unité de stockage de données telle qu'un disque dur magnétique.

## Revendications

1. Substrat en verre, destiné à être utilisé comme support dans une unité de stockage de données, renforcé par échanges d'ions superficiels et dont la matrice comprend les constituants ci-après dans les proportions pondérales suivantes :
| | |
|---|---|
| SiO₂ | 45 - 65 % |
| Al₂O₃ | 0 - 20 % |
| B₂O₃ | 0 - 5 % |
| Na₂O | 4 - 12 % |
| K₂O | 3.5 - 12 % |
| MgO | 0 - 8 % |
| CaO | 0 - 13 % |
| ZrO₂ | 0 - 20 % |
la somme des oxydes SiO₂, Al₂O₃ et ZrO₂ demeurant égale ou inférieure à 70 %, ladite composition comprenant éventuellement les oxydes BaO et/ou SrO dans des proportions telles que 11 % ≤ MgO + CaO + BaO + SrO ≤ 24 %, et les oxydes alcalins étant introduits selon des pourcentages pondéraux tels que 0,22 ≤ Na₂O / Na₂O + K₂O ≤ 0,60.

2. Substrat en verre selon la revendication 1 **caractérisé en ce que** la matrice comprend les constituants ci-après dans les proportions pondérales suivantes :
| | |
|---|---|
| SiO₂ | 45 - 65 % |
| Al₂O₃ | 0 - 20 % |
| B₂O₃ | 0 - 5 % |
| Na₂O | 4 - 12 % |
| K₂O | 4 - 12 % |
| MgO | 0 - 8 % |
| CaO | 0 - 8 % |
| ZrO₂ | 0 - 6 % |
la somme des oxydes SiO₂, Al₂O₃ et ZrO₂ demeurant égale ou inférieure à 70 %, ladite composition comprenant éventuellement les oxydes BaO et/ou SrO dans des proportions telles que 11% ≤ MgO + CaO + BaO + SrO ≤ 24 %, et les oxydes alcalins étant introduits selon des pourcentages pondéraux tels que 0,22 ≤ Na₂O / Na₂O + K₂O ≤ 0,60.

3. Substrat selon la revendication 1 ou 2 **caractérisé en ce que** la teneur pondérale en Al₂O₃ est supérieure ou égale à 10%.

4. Substrat selon l'une des revendications 1 à 3 **caractérisé en ce que** la teneur pondérale en ZrO₂ est inférieure à 5 %.

5. Substrat selon l'une des revendications 1 à 4 **caractérisé en ce que** la teneur pondérale en CaO est inférieure à 3 %.

6. Substrat selon l'une des revendications précédentes **caractérisé en ce que** la teneur pondérale en B₂O₃ est inférieure à 3 %.

7. Substrat selon l'une des revendications précédentes **caractérisé en ce que** la composition comprend les constituants ci-après dans les proportions pondérales suivantes :
| | |
|---|---|
| SiO₂ | 45 - 60 % |
| Al₂O₃ | 10 - 20 % |
| B₂O₃ | 0 - 3 % |
| Na₂O | 4 - 12 % |
| K₂O | 4 - 12 % |
| MgO | 0 - 8 % |
| CaO | 0 - 8 % |
| ZrO₂ | 0 - 5 % |
la somme des oxydes SiO₂, Al₂O₃ et ZrO₂ demeurant égale ou inférieure à 70 %, ladite composition comprenant éventuellement les oxydes BaO et/ou SrO dans des proportions telles que 14 % ≤ CaO + MgO + BaO + SrO ≤ 22 %, et les oxydes alcalins étant introduits selon des pourcentages pondéraux tels que 0,22 ≤ Na₂O / Na₂O + K₂O ≤ 0,60.

8. Substrat selon l'une des revendications précédentes **caractérisé en ce que** la matrice comprend les constituants ci-après dans les proportions pondérales suivantes :
| | |
|---|---|
| SiO₂ | 53,6 % |
| Al₂O₃ | 10,0 % |
| B₂O₃ | 2,2 % |
| Na₂O | 5,2 % |
| K₂O | 6,2 % |
| MgO | 4,2 % |
| CaO | 6,8 % |
| SrO | 7,0 % |
| BaO | 2,8 % |
| ZrO₂ | 2,0 % |

9. Substrat selon la revendication 1 **caractérisé en ce que** la matrice comprend les constituants ci-après dans les proportions pondérales suivantes :
| | |
|---|---|
| SiO₂ | 45 à 63 % |
| ZrO₂ | 6,5 à 20 % |
| Al₂O₃ | 0 à 18 % |
| Na2O | 4 à 12 % |
| K₂O | 3,5 à 7 % |
| CaO | 1 à 13 % |
| MgO | 1 à 8 % |
a somme des oxydes SiO₂, Al₂O₃ et ZrO₂ demeurant égale ou inférieure à 70 %, ladite composition comprenant éventuellement les oxydes BaO et/ou SrO dans des proportions telles que 11 % ≤ MgO + CaO + BaO + SrO ≤ 24 %, et les oxydes alcalins étant introduits selon des pourcentages pondéraux tels que 0,22 ≤ Na₂O / Na₂O + K₂O ≤ 0,60.

10. Substrat selon l'une des revendications précédentes **caractérisé en ce que** l'échange ionique est réalisé par trempe chimique.

11. Substrat selon la revendication 10 **caractérisé en ce que** la trempe chimique est effectuée dans un bain de KNO₃, à une température comprise entre 400 et 520 ° C et pendant une durée inférieure à 24 heures.

12. Substrat selon l'une des revendications 10 ou 11 **caractérisé en ce que** la trempe chimique peut être activée par des facteurs extérieurs tels qu'un champ électrique ou des ultrasons.

13. Substrat selon l'une quelconque des revendications précédentes **caractérisé en ce qu**'il est obtenu selon le procédé float puis par découpe, perçage et façonnage.

14. Substrat selon l'une quelconque des revendications 1 à 12 **caractérisé en ce qu**'il est obtenu par pressage d'une paraison, puis par perçage et façonnage.

15. Substrat selon l'une quelconque des revendications précédentes **caractérisé en ce qu**'il est poli de sorte que la rugosité corresponde à un Ra inférieur à 30 Angströms.

16. Substrat selon la revendication 15 **caractérisé en ce qu**'il subit un polissage de finition conduisant à une rugosité dont le Ra est inférieur à 10 Angströms.

17. Utilisation d'un substrat selon l'une des revendications 1 à 16 comme support dans un disque dur magnétique.

## Claims

1. Glass substrate which is designed to be used as a data carrier in a data storage unit, which is reinforced by surface ion exchanges and whose matrix comprises the following constituents in the following proportions by weight:
| | |
|---|---|
| SiO₂ | 45 - 65% |
| Al₂O₃ | 0 - 20% |
| B₂O₃ | 0 - 5% |
| Na₂O | 4 - 12% |
| K₂O | 3.5 - 12% |
| MgO | 0 - 8% |
| CaO | 0 - 13% |
| ZrO₂ | 0 - 20% |
the sum of the oxides SiO₂, Al₂O₃ and ZrO₂ remaining equal to or less than 70%, the said composition optionally comprising the oxides BaO and/or SrO in proportions such that 11% ≤ MgO + CaO + BaO + SrO ≤ 24%, and the alkaline oxides being introduced in percentages by weight such that 0.22 ≤ Na₂O / Na₂O + K₂O ≤ 0.60.

2. Glass substrate according to Claim 1, characterised in that the matrix comprises the following constituents in the following proportions by weight:
| | |
|---|---|
| SiO₂ | 45 - 65% |
| Al₂O₃ | 0 - 20% |
| B₂O₃ | 0 - 5% |
| Na₂O | 4 - 12% |
| K₂O | 4 - 12% |
| MgO | 0 - 8% |
| CaO | 0 - 8% |
| ZrO₂ | 0 - 6% |
the sum of the oxides SiO₂, Al₂O₃ and ZrO₂ remaining equal to or less than 70%, the said composition optionally comprising the oxides BaO and/or SrO in proportions such that 11% ≤ MgO + CaO + BaO + SrO ≤ 24%, and the alkaline oxides being introduced in percentages by weight such that 0.22 ≤ Na₂O / Na₂O + K₂O ≤ 0.60.

3. Substrate according to Claim 1 or 2, characterised in that the proportion by weight of Al₂O₃ is greater than or equal to 10%.

4. Substrate according to one of Claims 1 to 3, characterised in that the proportion by weight of ZrO₂ is less than 5%.

5. Substrate according to one of Claims 1 to 4, characterised in that the proportion by weight of CaO is less than 3%.

6. Substrate according to one of the preceding claims, characterised in that the proportion by weight of B₂O₃ is less than 3%.

7. Substrate according to one of the preceding claims, characterised in that the composition comprises the following constituents in the following proportions by weight:
| | |
|---|---|
| SiO₂ | 45 - 60% |
| Al₂O₃ | 10 - 20% |
| B₂O₃ | 0 - 3% |
| Na₂O | 4 - 12% |
| K₂O | 4 - 12% |
| MgO | 0 - 8% |
| CaO | 0 - 8% |
| ZrO₂ | 0 - 5% |
the sum of the oxides SiO₂, Al₂O₃ and ZrO₂ remaining equal to or less than 70%, the said composition optionally comprising the oxides BaO and/or SrO in proportions such that 14% ≤ CaO + MgO + BaO + SrO ≤ 22%, and the alkaline oxides being introduced in percentages by weight such that 0.22 ≤ Na₂O / Na₂O + K₂O ≤ 0.60.

8. Substrate according to one of the preceding claims, characterised in that the matrix comprises the following constituents in the following proportions by weight:
| | |
|---|---|
| SiO₂ | 53.6% |
| Al₂O₃ | 10.0% |
| B₂O₃ | 2.2% |
| Na₂O | 5.2% |
| K₂O | 6.2% |
| MgO | 4.2% |
| CaO | 6.8% |
| SrO | 7.0% |
| BaO | 2.8% |
| ZrO₂ | 2.0% |

9. Substrate according to Claim 1, characterised in that the matrix comprises the following constituents in the following proportions by weight:
| | |
|---|---|
| SiO₂ | 45 to 63% |
| ZrO₂ | 6.5 to 20% |
| Al₂O₃ | 0 to 18% |
| Na₂O | 4 to 12% |
| K₂O | 3.5 to 7% |
| CaO | 1 to 13% |
| MgO | 1 to 8% |
the sum of the oxides SiO₂, Al₂O₃ and ZrO₂ remaining equal to or less than 70%, the said composition optionally comprising the oxides BaO and/or SrO in proportions such that 11% ≤ MgO + CaO + BaO + SrO ≤ 24%, and the alkaline oxides being introduced in percentages by weight such that 0.22 ≤ Na₂O / Na₂O + K₂O ≤ 0.60.

10. Substrate according to one of the preceding claims, characterised in that the ion exchange is performed by chemical quenching.

11. Substrate according to Claim 10, characterised in that the chemical quenching is carried out in a bath of KNO₃ at a temperature of between 400 and 520°C and for a period of less than 24 hours.

12. Substrate according to one of Claims 10 or 11, characterised in that the chemical quenching can be activated by external factors such as an electrical field or ultrasound.

13. Substrate according to any one of the preceding claims, characterised in that it is obtained using the float process and then by cutting, drilling and shaping.

14. Substrate according to any one of Claims 1 to 12, characterised in that it is obtained by pressing a parison, and then by drilling and shaping.

15. Substrate according to any one of the preceding claims, characterised in that it is polished so that the roughness corresponds to an Ra of less than 30 angstroms.

16. Substrate according to Claim 15, characterised in that it undergoes a final polishing leading to a roughness whose Ra is less than 10 angstroms.

17. Use of a substrate according to one of Claims 1 to 16 as a data carrier in a magnetic hard disk.

## Patentansprüche

1. Glassubstrat für eine Verwendung als Träger in einer Datenspeichereinheit, das durch einen Oberflächen-Ionenaustausch verfestigt ist und dessen Matrix folgende Bestandteile in nachstehenden Gewichtsanteilen
| | |
|---|---|
| SiO₂ | 45 bis 65 %, |
| Al₂O₃ | 0 bis 20 %, |
| B₂O₃ | 0 bis 5 %, |
| Na₂O | 4 bis 12 %, |
| K₂O | 3,5 bis 12 %, |
| MgO | 0 bis 8 %, |
| CaO | 0 bis 13 % und |
| ZrO₂ | 0 bis 20 % |
umfaßt, wobei die Summe der Oxide SiO₂, Al₂O₃ und ZrO₂ gleich oder kleiner als 70 % bleibt, die Zusammensetzung gegebenenfalls die Oxide BaO und/oder SrO in solchen Anteilen enthält, daß 11 % ≤ MgO + CaO + BaO + SrO ≤ 24 % und die Alkalimetalloxide in solchen prozentualen Gewichtsanteilen eingebaut sind, daß 0,22 ≤ Na₂O/Na₂O + K₂O ≤ 0,60 erfüllt ist.

2. Glassubstrat nach Anspruch 1, **dadurch gekennzeichnet, daß** die Matrix folgende Bestandteile in nachstehenden Gewichtsanteilen
| | |
|---|---|
| SiO₂ | 45 bis 65 %, |
| Al₂O₃ | 0 bis 20 %, |
| B₂O₃ | 0 bis 5 %, |
| Na₂O | 4 bis 12 %, |
| K₂O | 4 bis 12 %, |
| MgO | 0 bis 8 %, |
| CaO | 0 bis 8 % und |
| ZrO₂ | 0 bis 6 % |
umfaßt, wobei die Summe der Oxide SiO₂, Al₂O₃ und ZrO₂ gleich oder kleiner als 70 % bleibt, die Zusammensetzung gegebenenfalls die Oxide BaO und/oder SrO in solchen Anteilen enthält, daß 11 % ≤ MgO + CaO + BaO + SrO ≤ 24 % und die Alkalimetalloxide in solchen prozentualen Gewichtsanteilen eingebaut sind, daß 0,22 ≤ Na₂O/Na₂O + K₂O $≤ 0,60 erfüllt ist.

3. Substrat nach Anspruch 1 oder 2, **dadurch gekennzeichnet, daß** der Gewichtsanteil an Al₂O₃ größer oder gleich 10 % ist.

4. Substrat nach einem der Ansprüche 1 bis 3, **dadurch gekennzeichnet, daß** der Gewichtsanteil an ZrO₂ kleiner als 5 % ist.

5. Substrat nach einem der Ansprüche 1 bis 4, **dadurch gekennzeichnet, daß** der Gewichtsanteil an CaO kleiner als 3 % ist.

6. Substrat nach einem der vorhergehenden Ansprüche, **dadurch gekennzeichnet, daß** der Gewichtsanteil an B₂O₃ kleiner als 3 % ist.

7. Substrat nach einem der vorhergehenden Ansprüche, **dadurch gekennzeichnet, daß** die Zusammensetzung folgende Bestandteile in nachstehenden Gewichtsanteilen
| | |
|---|---|
| SiO₂ | 45 bis 60 %, |
| Al₂O₃ | 10 bis 20 %, |
| B₂O₃ | 0 bis 3 %, |
| Na₂O | 4 bis 12 %, |
| K₂O | 4 bis 12 %, |
| MgO | 0 bis 8 %, |
| CaO | 0 bis 8 % und |
| ZrO₂ | 0 bis 5 % |
umfaßt, wobei die Summe der Oxide SiO₂, Al₂O₃ und ZrO₂ gleich oder kleiner als 70 % bleibt, die Zusammensetzung gegebenenfalls die Oxide BaO und/oder SrO in solchen Anteilen enthält, daß 14 % ≤ CaO + MgO + BaO + SrO ≤ 22 % und die Alkalimetalloxide in solchen prozentualen Gewichtsanteilen eingebaut sind, daß 0,22 ≤ Na₂O/Na₂O + K₂O ≤ 0,60 erfüllt ist.

8. Substrat nach einem der vorhergehenden Ansprüche, **dadurch gekennzeichnet, daß** die Matrix folgende Bestandteile in nachstehenden Gewichtsanteilen umfaßt:
| | |
|---|---|
| SiO₂ | 53,6 %, |
| Al₂O₃ | 10,0 %, |
| B₂O₃ | 2,2 %, |
| Na₂O | 5,2 %, |
| K₂O | 6,2 %, |
| MgO | 4,2 %, |
| CaO | 6,8 %, |
| SrO | 7,0 %, |
| BaO | 2,8 %, |
| ZrO₂ | 2,0 %. |

9. Substrat nach Anspruch 1, **dadurch gekennzeichnet, daß** die Matrix folgende Bestandteile in nachstehenden Gewichtsanteilen
| | |
|---|---|
| SiO₂ | 45 bis 63 %, |
| ZrO₂ | 6,5 bis 20 %, |
| Al₂O₃ | 0 bis 18 %, |
| Na₂O | 4 bis 12 %, |
| K₂O | 3,5 bis 7 %, |
| CaO | 1 bis 13 % und |
| MgO | 1 bis 8 % |
umfaßt, wobei die Summe der Oxide SiO₂, Al₂O₃ und ZrO₂ gleich oder kleiner als 70 % bleibt, die Zusammensetzung gegebenenfalls die Oxide BaO und/oder SrO in solchen Anteilen enthält, daß 11 % ≤ MgO + CaO + BaO + SrO ≤ 24 % und die Alkalimetalloxide in solchen prozentualen Gewichtsanteilen eingebaut sind, daß 0,22 ≤ Na₂O/Na₂O + K₂O ≤ 0,60 erfüllt ist.

10. Substrat nach einem der vorhergehenden Ansprüche, **dadurch gekennzeichnet, daß** der Ionenaustausch durch chemisches Vorspannen erfolgt.

11. Substrat nach Anspruch 10, **dadurch gekennzeichnet, daß** das chemische Vorspannen in einem KNO₃-Bad während einer Dauer von weniger als 24 Stunden bei einer Temperatur von 400 bis 520 °C durchgeführt wird.

12. Substrat nach Anspruch 10 oder 11, **dadurch gekennzeichnet, daß** das chemische Vorspannen durch äußere Faktoren wie ein elektrisches Feld oder Ultraschall aktiviert werden kann.

13. Substrat nach einem der vorhergehenden Ansprüche, **dadurch gekennzeichnet, daß** es durch das Floatverfahren und danach durch Zuschneiden, Bohren und Kantenbearbeitung hergestellt wird.

14. Substrat nach einem der Ansprüche 1 bis 12, **dadurch gekennzeichnet, daß** es durch Pressen eines Vorformlings und danach durch Bohren und Kantenbearbeitung hergestellt wird.

15. Substrat nach einem der vorhergehenden Ansprüche, **dadurch gekennzeichnet, daß** es derart poliert ist, daß seine Rauhtiefe einem Rₐ von weniger als 30 Angström entspricht.

16. Substrat nach Anspruch 15, **dadurch gekennzeichnet, daß** es einem Endpoliervorgang unterworfen wird, der eine Rauhtiefe ergibt, deren Rₐ weniger als 10 Angström beträgt.

17. Verwendung eines Substrats nach einem der Ansprüche 1 bis 16 als Träger in einer Magnetplatte.
